# EUROPÄISCHE PATENTANMELDUNG

(11) **EP 0 848 975 A2**
(43) Veröffentlichungstag der Anmeldung: **24.06.1998**
(21) Anmeldenummer: 97116313.4
(22) Anmeldetag: 19.09.1997
(51) Int. Cl.: B01D 15/00, C10G 25/00

(54) **Verfahren zur Abtrennung einzelner Komponenten aus motorischem Kraftstoff**

(30) Priorität: 18.12.1996 DE 19652681
(71) Anmelder: DORNIER GmbH, 88039 Friedrichshafen (DE)
(72) Erfinder: Andorf, Renato, Dr.rer.nat., 88074 Meckenbeuren (DE); Plog, Carsten, Dr.rer.nat., 88677 Markdorf (DE); Stengel, Thomas, Chem.-Ing., 88045 Friedrichshafen (DE); Maunz, Werner, 88677 Markdorf (DE)
(74) Vertreter: Meel, Thomas

(57) **Zusammenfassung**

Die Erfindung betrifft ein Verfahren zur Abtrennung einzelner Komponenten aus motorischem Kraftstoff, wobei die Abtrennung mittels selektiver Flüssigphasen-Adsorption erfolgt, und der Kraftstoff unverdünnt der Adsorptionsvorrichtung zugeführt wird.

## Beschreibung

Die Erfindung betrifft ein Verfahren zur Abtrennung einzelner Komponenten aus motorischem Kraftstoff nach dem Oberbegriff des Patentanspruchs 1.

An Bord eines mit Verbrennungsmotor betriebenen Kraftfahrzeugs werden für spezielle Anwendungen bestimmte Fraktionen des handelsüblichen, motorischen Kraftstoffs benötigt. Es ist z.B. bekannt, daß die Verwendung von niedersiedenden Kraftstofffraktionen in der Kaltstartphase bei Fahrzeugen mit Ottomotoren zu einer Absenkung der Kohlenwasserstoff-Emissionen führt.

Aus der chemischen Analytik sind chromatographische Verfahren zur Trennung einzelner Kraftstofffraktionen durch Adsorption bekannt. Bei diesen Verfahren wird in einen konstanten Strom von Trägerflüssigkeit, der eine Adsorptionsvorrichtung in Form einer Trennsäule durchströmt, einmalig eine Probe mit den zu trennenden Kraftstoffkomponenten eingespritzt. Die Konzentration der Kraftstoffkomponenten in der Trägerflüssigkeit beträgt dabei weit unter 1 %. Die Kraftstoffkomponenten werden am Adsorptionsmaterial innerhalb der Trennsäule vorübergehend gebunden, danach aber wieder freigesetzt und verlassen anschließend die Trennsäule. Aufgrund der spezifischen Wechselwirkungseigenschaften zwischen Adsorptionsmaterial und den Kraftstoffkomponenten dauert diese Bindung für die einzelnen Kraftstoffkomponenten unterschiedlich lange. Die Kraftstoffkomponenten verlassen dadurch die Trennsäule zu verschiedenen Zeitpunkten, wodurch letztendlich die Trennung erreicht wird.
Treibende Kraft für das Wiederfreisetzen der in der Trennsäule zeitweise adsorbierten Kraftstoffkomponenten ist die Tatsache, daß ständig Trägerflüssigkeit (ohne Kraftstoffkomponenten) in die Trennsäule nachgeführt wird. Um trotz der Nachführung der Tragerflüssigkeit das Gleichgewicht zwischen Adsorptionsmaterial und der Trägerflüssigkeit aufrecht zu erhalten, erfolgt die beschriebene Wiederfreisetzung der Kraftstoffkomponenten.

Aufgabe der Erfindung ist es, ein Verfahren zur Abtrennung einzelner Komponenten aus einem motorischen Kraftstoff zu schaffen, wobei Bauvolumen und Baugewicht entsprechend der Anwendung an Bord eines Kraftfahrzeugs gering gehalten werden können.

Diese Aufgabe wird mit einem Verfahren nach Patentanspruch 1 gelöst. Vorteilhafte Ausbildungen sind Gegenstand von Unteransprüchen.

Erfindungsgemäß erfolgt die Trennung mittels selektiver Flüssigphasen-Adsorption, wobei der Kraftstoff unverdünnt der Adsorptionsvorrichtung zugeführt wird.

Dabei ist es möglich, entweder die abzutrennenden Kraftstoffkomponenten zu adsorbieren oder umgekehrt gerade alle übrigen Komponenten zu adsorbieren. Im erstgenannten Fall liegen die abzutrennenden Kraftstoffkomponenten nach der Regeneration des Adsorptionsmaterials vor. Im letztgenannten Fall liegen die abzutrennenden Kraftstoffkomponenten unmittelbar nach Durchlaufen der Adsorptionsvorrichtung vor.

Als Adsorptionsmaterial kommen allgemein Festkörper mit hoher Oberfläche (bevorzugt im Bereich von 10 bis 1600 m²/g) in Betracht, insbesondere Al₂O₃, SiO₂ (Kieselgel), TiO₂, ZrO₂, Zeolithe oder Aktivkohle.

Das erfindungsgemäße Verfahren ermöglicht einen einfachen und kompakten Aufbau des Adsorbermoduls. Auf komplexe Komponenten kann verzichtet werden. Folglich können Bauvolumen und Baugewicht klein gehalten werden.
Ein wesentlicher Vorteil des Verfahrens besteht darin, daß im Falle der Adsorption der abzutrennenden Komponenten diese sofort beim Starten des Motors bereitgestellt werden können. Dadurch entfällt die Notwendigkeit eines Vorratstanks für den aufbereiteten Kraftstoff.

Weiterhin wird bei diesem Verfahren auf den Einsatz einer Trägerflüssigkeit, wie sie bei den erwähnten chromatographischen Verfahren eingesetzt wird, verzichtet. Ein zusätzlicher Betriebsstoff ist demnach nicht erforderlich.

Das erfindungsgemäße Verfahren der Flüssigphasenadsorption eignet sich aufgrund der genannten Vorteile insbesondere für den Einsatz in mobilen Systemen, wie Personen- und Nutzfahrzeugen.

Mit dem erfindungsgemäßen Verfahren können z.B. die niedersiedenden Kraftstoffkomponenten, die dem Ottomotor zur Absenkung der Kohlenwasserstoff-Emissionen von Ottomotoren in der Kaltstartphase zugegeben werden, abgetrennt werden. Unter niedersiedenden Komponenten sind dabei insbesondere jene Komponenten mit einem Siedepunkt geringer als 80 ^{o}C zu verstehen.

Desweiteren können die mit dem erfindungsgemäßen Verfahren abgetrennten Kraftstoffkomponenten z.B. für folgende Zwecke genutzt werden:
- zum Einstellen von Motorbetriebsphasen mit höherer Motorkompression;
- als Reduktionsmittel zur katalytischen Entstickung von motorischen Abgasen;
- zur Absenken der Anspringtemperatur von Abgasnachbehandlungskatalysatoren.

Die Erfindung wird anhand von Fig. näher erläutert. Es zeigen:
- Fig. 1: den prinzipiellen Aufbau des erfindungsgemäßen Verfahrens;
- Fig. 2: eine Vorrichtung zur Durchführung des erfindungsgemäßen Verfahrens;
- Fig. 3: einen Versuchsaufbau zur Bestimmung der Adsorbereigenschaften und Adsorberkapazität;
- Fig. 4: eine Vergleich der Trennleistung zweier Adsorptionsmaterialien;
- Fig. 5,6: die Konzentration einzelner Kraftstoffkomponenten am Ausgang der Adsorptionsvorrichtung.

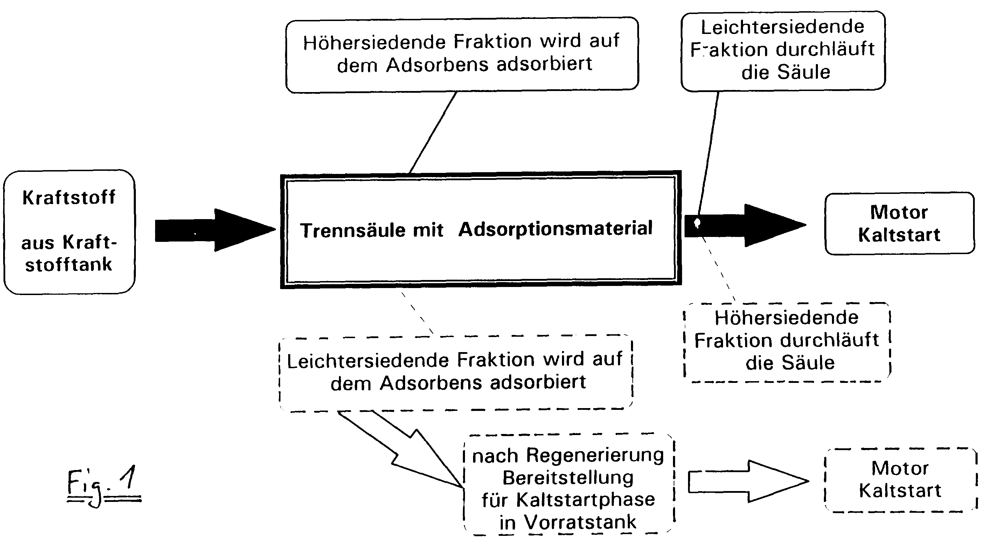

Fig. 1 zeigt den prinzipiellen Aufbau des erfindungsgemäßen Verfahrens am Beispiel der Abtrennung niedersiedender Kraftstoffkomponenten. Der Kraftstoff aus dem Kraftstofftank durchläuft die Trennsäule mit dem Adsorptionsmaterial. Je nach Wahl des Adsorptionsmaterials ist es möglich, die niedersiedenden oder die hochsiedenden Fraktionen zu adsorbieren. Wenn die hochsiedenden Fraktionen adsorbiert werden, stehen die niedersiedenden Fraktionen unmittelbar am Ausgang der Trennsäule zur Verfügung und können in den Motor eingespritzt werden.

Gestrichelt eingezeichnet ist die Ausführung des erfindungsgemäßen Verfahrens, bei dem die niedrigsiedenden Komponenten adsorbiert werden. Diese stehen dann nach Regeneration des Adsorptionsmaterials für die Einspritzung in den Motor zur Verfügung. Vorteilhaft werden sie nach Regeneration des Adsorptionsmaterials und vor dem Einspritzen in den Motor in einem Vorratstank gespeichert.

Das Adsorptionsmaterial hat eine zeitlich begrenzte Trennleistung und muß nach einiger Zeit durch thermische Behandlung regeneriert werden. Die Regeneration kann in einer besonders vorteilhaften Ausführung durch Thermostatisierung mittels des im Fahrzeug befindlichen Kühlmittelkreislaufs (80°C) erfolgen.

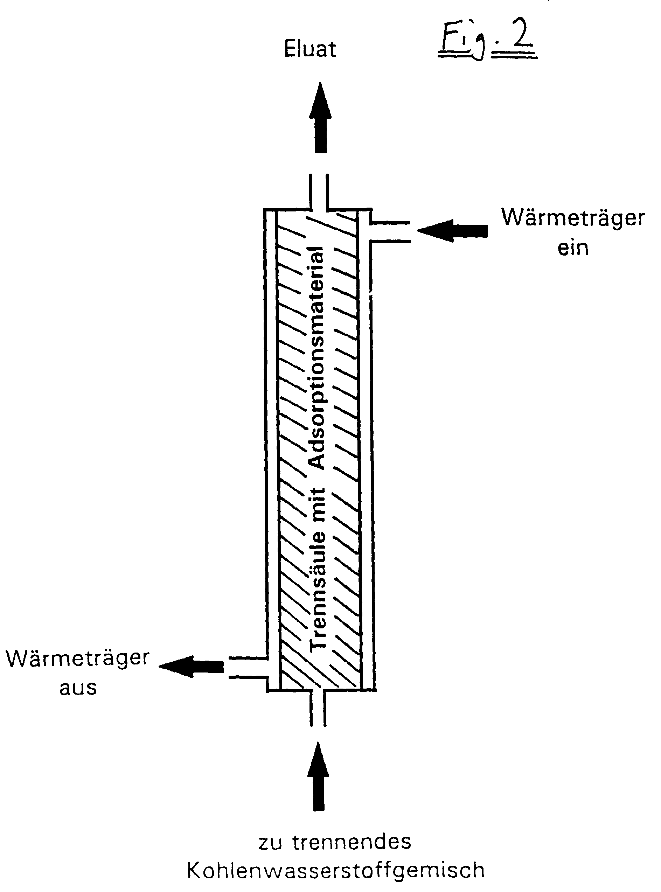

Fig. 2 zeigt in schematischer Darstellung eine Adsorptionsvorrichtung in der Form einer Trennsäule, deren Inneres von dem Adsorptionsmaterial erfüllt ist. Das zu trennende Kraftstoffgemisch wird unverdünnt in den Eingang der Trennsäule und an das Adsorptionsmaterial gegeben. Die nicht adsorbierten Kraftstoffkomponenten verlassen als Eluat die Trennsäule am gegenüberliegenden Ende. Die Trennsäule ist von einem Ringkanal umgeben, der von einem Wärmeträger zur Temperierung der Trennsäule durchflossen wird.

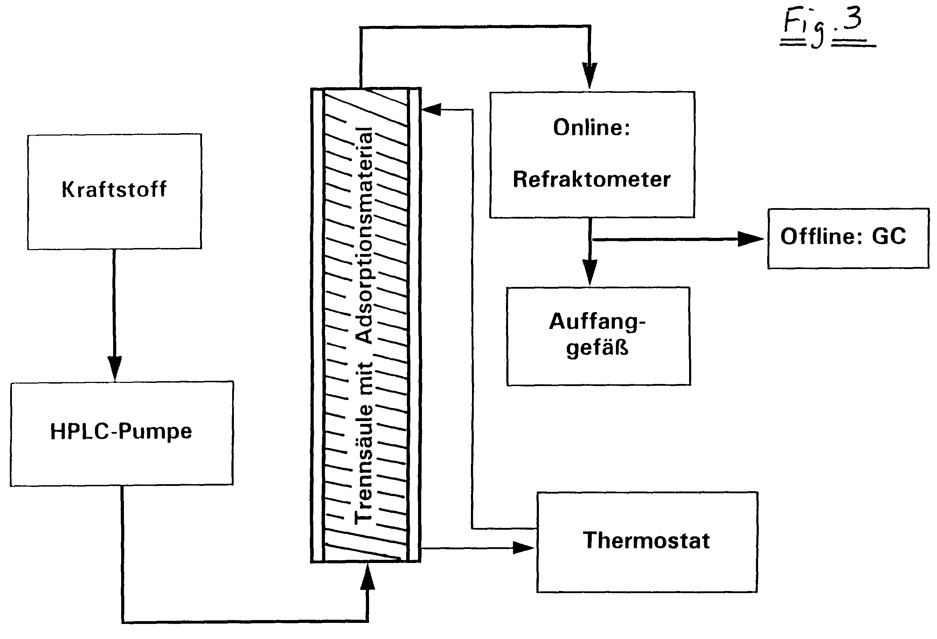

In Fig. 3 ist ein Versuchsaufbau zur Bestimmung der Adsorbereigenschaften und der Adsorberkapazität dargestellt. Der Kraftstoff wird einem Vorratsgefäß entnommen und über eine HPLC-Pumpe (max. Durchfluß 10 ml/min) durch die thermostatisierte Adsorptionssäule gefördert. Am Säulenausgang wird mittels eines Refraktometers die Trennleistung online verfolgt. Für eine quantitative Analyse kann das Eluat offline gaschromatographisch untersucht werden.

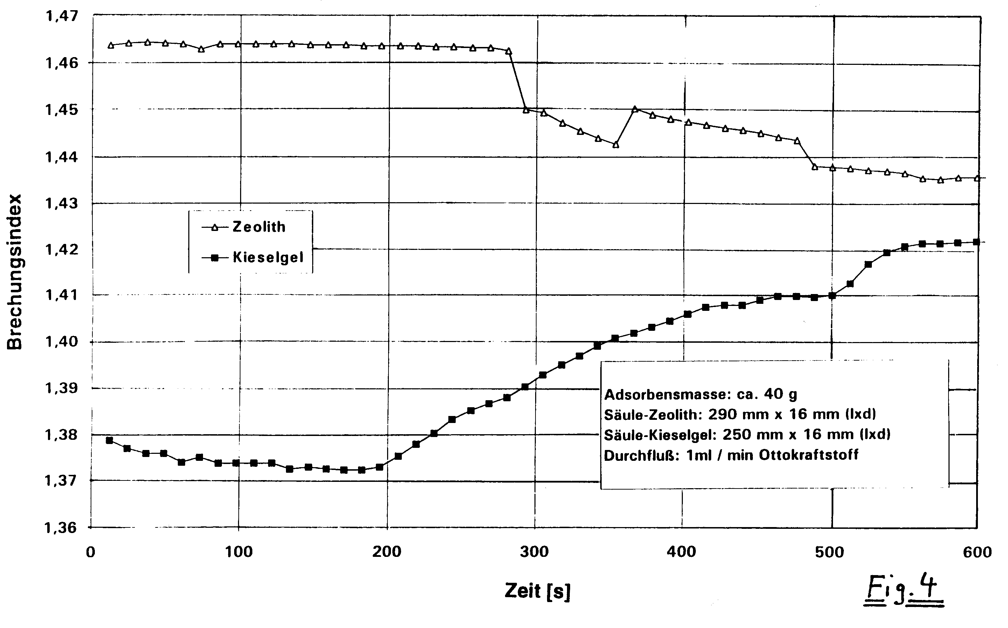

Fig. 4 zeigt einen Vergleich der Trennleistung zweier Adsorptionsmaterialien über eine Säulenbetriebsdauer von 600 Sekunden (Säulenabmessungen: 290 mm * 16 mm bei Zeolith als Adsorptionsmaterial, 250 mm * 16 mm bei Kieselgel als Adsorptionsmaterial, Masse des Adsorptionsmaterials: 40 g, Durchfluß: 1ml/min Ottokraftstoff). Als Meßgröße ist der Brechungsindex des Eluats aufgetragen. Der Referenzkraftstoff (handelsüblicher Ottokraftstoff) hat einen Brechungsindex von 1,42. Ein höherer Brechungsindex im Eluat weist auf eine Anreicherung hochsiedender Komponenten hin, ein niedrigerer Brechungsindex zeigt eine Anreicherung niedersiedender Komponenten an. Mit dem zeolithischen Adsorptionsmaterial werden demnach niedersiedende Komponenten adsorbiert, während am Kieselgel hochsiedende Verbindungen adsorbiert werden. Das unterschiedliche Adsorptionsverhalten der beiden Materialien spiegelt die zwei möglichen Verfahrensvarianten, wie sie in Fig. 1 dargestellt sind, wieder.

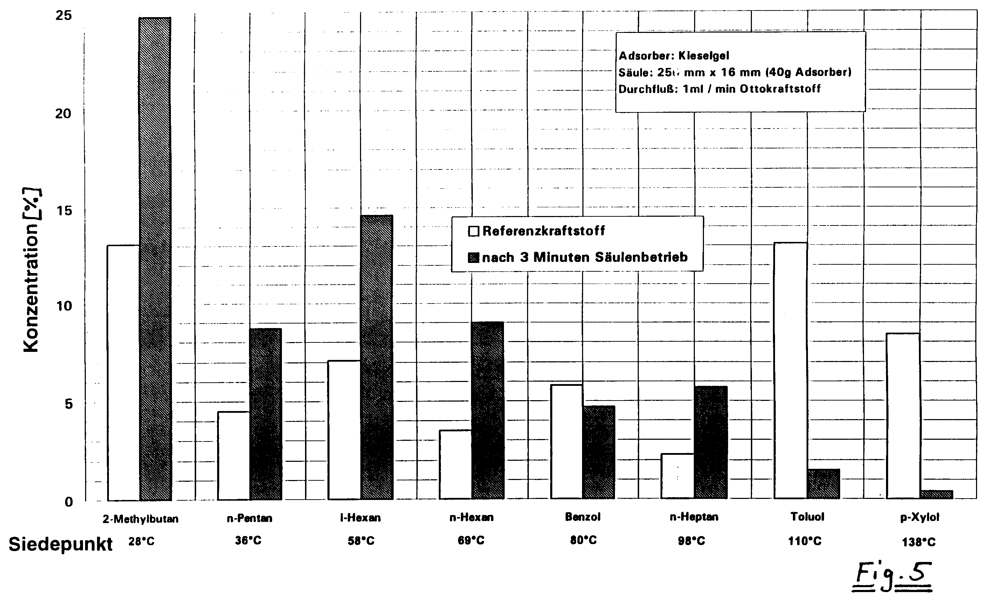

Fig. 5 zeigt einen Vergleich der Zusammensetzung des Referenzkraftstoffes (ohne Schraffur) mit der des Kraftstoffs am Säulenausgang (mit Schraffur) nach 3 Minuten Säulenbetrieb mit Kieselgel als Adsorptionsmaterial (Säulenabmessungen: 250 mm * 16 mm, Masse des Adsorptionsmaterials: 40 g, Durchfluß: 1ml/min Ottokraftstoff). Die Siedetemperatur der dargestellten Komponenten steigt von links nach rechts. Niedersiedende Komponenten (Aliphaten) wie 2-Methylbutan, n-Pentan, n-Hexan, i-Hexan werden angereichert, hochsiedende Komponenten (Aromaten) wie Toluol, Xylol werden stark abgereichert. Unterhalb der Bezeichnungen für die einzelnen Komponenten sind deren Siedetemperaturen angegeben.

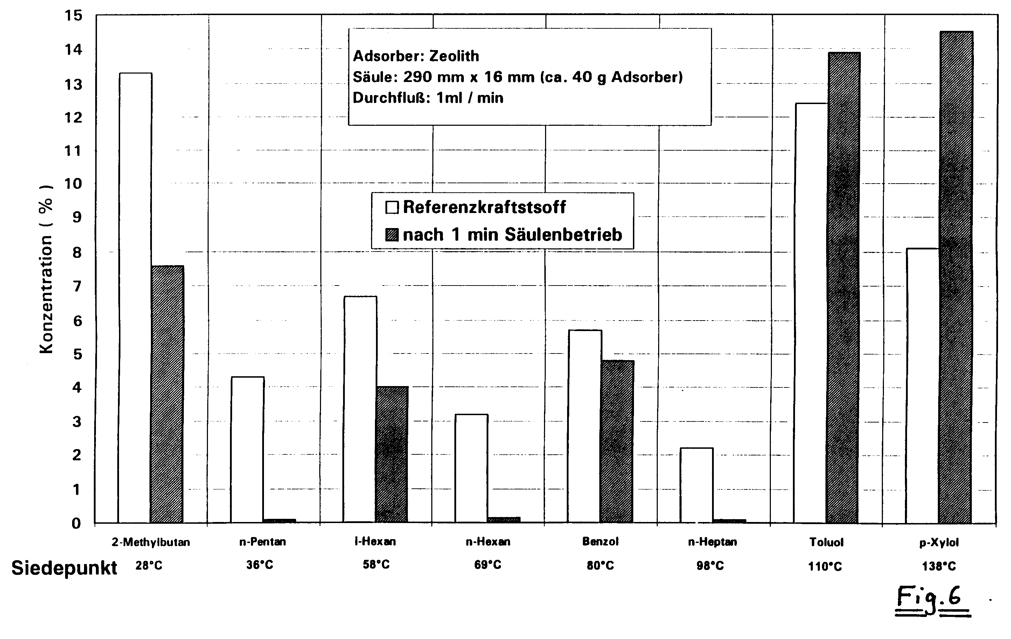

Fig. 6 zeigt das entsprechende Ergebnis nach einem Betrieb von 1 Minute mit dem zeolithischen Adsorptionsmaterial (Säulenabmessungen: 290 mm * 16 mm, Masse des Adsorptionsmaterials: 40 g, Durchfluß: 1ml/min Ottokraftstoff). Die Werte für den Referenzkraftstoff sind ohne, die Werte für den Kraftstoff am Säulenausgang sind mit Schraffur eingezeichnet. An diesem Material sind die Konzentrationen der niedersiedenden Komponenten im Eluat niedriger als im zugespeisten Kraftstoff. Demnach werden diese am Zeolithen adsorbiert. Die höhersiedenden Komponenten (u.a. Toluol, p-Xylol) werden entsprechend im Eluat angereichert. Unterhalb der Bezeichnungen für die einzelnen Komponenten sind deren Siedetemperaturen angegeben.

## Patentansprüche

1. Verfahren zur Abtrennung einzelner Komponenten aus motorischem Kraftstoff, wobei die Abtrennung mittels selektiver Flüssigphasen-Adsorption erfolgt, **dadurch gekennzeichnet**, daß der Kraftstoff unverdünnt der Adsorptionsvorrichtung zugeführt wird und entweder
- die abzutrennenden Komponenten in der Adsorptionsvorrichtung adsorbiert werden und das Adsorptionsmaterial der Adsorptionsvorrichtung anschließend regeneriert wird, oder
- die abzutrennenden Komponenten die Adsorptionsvorrichtung durchlaufen, und die übrigen Komponenten in der Adsorptionsvorrichtung adsorbiert werden.

2. Verfahren nach Anspruch 1, **dadurch gekennzeichnet**, daß das Adsorptionsmaterial eine innere Oberfläche von 10 bis 1600 m²/g aufweist.

3. Verfahren nach einem der vorangehenden Ansprüche, **dadurch gekennzeichnet**, daß das Adsorptionsmaterial Al₂O₃, SiO₂, TiO₂, ZrO₂, Aktivkohle oder ein Zeolith ist.

4. Verfahren nach einem der vorangehenden Ansprüche, **dadurch gekennzeichnet**, daß die abzutrennten Komponenten nach erfolgter Abtrennung zwischengespeichert werden.

5. Verfahren nach einem der vorangehenden Ansprüche, **dadurch gekennzeichnet**, daß die abzutrennenden Komponenten unmittelbar nach erfolgter Abtrennung genutzt werden.

6. Verfahren nach einem der vorangehenden Ansprüche, **dadurch gekennzeichnet**, daß es an Bord eines Kraftfahrzeuges durchgeführt wird.

7. Verfahren nach einem der vorangehenden Ansprüche, **dadurch gekennzeichnet**, daß die abzutrennenden Kraftstoffkomponenten niedersiedende Kraftstoff-Komponenten sind, welche nach erfolgter Abtrennung zur Absenkung der Kohlenwasserstoff-Emissionen in der Kaltstartphase einem Ottomotor zugegeben werden.

8. Verfahren nach einem der vorangehenden Ansprüche, **dadurch gekennzeichnet**, daß die abzutrennenden Komponenten nach erfolgter Abtrennung zum Einstellen von Motorbetriebsphasen mit höherer Motorkompression genutzt werden.

9. Verfahren nach einem der vorangehenden Ansprüche, **dadurch gekennzeichnet**, daß die abzutrennenden Komponenten nach erfolgter Abtrennung als Reduktionsmittel zur katalytischen Entstickung von motorischen Abgasen genutzt werden.

10. Verfahren nach einem der vorangehenden Ansprüche, **dadurch gekennzeichnet**, daß die abzutrennenden Komponenten nach erfolgter Abtrennung zur Absenkung der Anspringtemperatur von Abgasnachbehandlungskatalysatoren genutzt werden.
